# EUROPEAN PATENT APPLICATION

(11) **EP 4 765 430 A1**
(43) Date of publication of application: **24.06.2026**
(21) Application number: 25809946.4
(22) Date of filing: 14.04.2025
(51) Int. Cl.: H01M 50/383, H01M 10/658, H01M 50/289, H01M 50/249

(54) **BATTERY MODULE, AND BATTERY PACK AND VEHICLE INCLUDING SAME**

(30) Priority: 08.05.2024 KR 20240060562
(71) Applicant: LG Energy Solution, Ltd., Seoul 07335 (KR)
(72) Inventor: LEE, Joo-Hyoung, Daejeon 34122 (KR); JUNG, Hye-Mi, Daejeon 34122 (KR)
(74) Representative: Plasseraud IP
(86) International application number: PCT/KR2025/005047
(87) International publication number: WO 2025/234633

(57) **Abstract**

The present disclosure relates to a battery module including: a plurality of battery cells; a module case configured to store the plurality of battery cells and having a plurality of venting holes formed on one side thereof; and a barrier member provided inside the module case and configured to partition the plurality of battery cells into a plurality of cell groups and to communicate each of the plurality of cell groups with the venting hole corresponding thereto.

## Description

### TECHNICAL FIELD

The present disclosure relates to a battery module, and a battery pack and vehicle including the same. Specifically, the present disclosure relates to a battery module capable of suppressing thermal propagation inside the battery module, and a battery pack and vehicle including the same.

This application is based on and claims priority from Korean Patent Application No. 10-2024-0060562, filed on May 08, 2024, with the Korean Intellectual Property Office, the disclosure of which is incorporated herein in its entirety by reference.

### BACKGROUND ART

Secondary batteries, which offer high applicability across product categories and possess electrical characteristics such as high energy density, are widely applied not only to portable devices but also to electric vehicles (EVs) or hybrid electric vehicles (HEVs) that are driven by electric power sources. Such secondary batteries are gaining attention as a new energy source for enhancing environmental sustainability and energy efficiency not only due to their primary advantage of significantly reducing the use of fossil fuels, but also because they generate no by-products from energy usage.

Secondary batteries that are currently widely used include lithium-ion batteries, lithium polymer batteries, nickel-cadmium batteries, nickel-metal hydride batteries, and nickel-zinc batteries. When high output voltage is required, multiple battery cells may be connected in series to form a battery module or battery pack. In addition, to increase charge/discharge capacity, multiple battery cells may be connected in parallel to configure a battery module or battery pack. Accordingly, the number of battery cells included in the battery module or pack may be variously configured depending on the required output voltage or charge/discharge capacity.

Meanwhile, since a battery cell involves a chemical reaction during charging and discharging, its performance may deteriorate when used in environments exceeding the appropriate temperature. Moreover, if thermal control is not properly maintained at the appropriate temperature, there remains a potential risk of unexpected ignition or explosion. In addition, a battery module is configured in a structure in which such battery cells are densely stored inside a module housing. Therefore, if a thermal event occurs in any one of the battery cells, the high-temperature gas and flame discharged therefrom may propagate to adjacent battery cells, leading to a chain reaction of battery cell explosions, which poses a significant safety risk.

Therefore, conventional battery modules are configured to partition or separate battery cells by interposing thermal barriers such as aerogel or silicone between the battery cells. However, these thermal barriers are vulnerable to flames and have low rigidity, so there is a high risk of damage if a battery cell explodes. Furthermore, the shape of the thermal barrier is deformed by high pressure resulting from swelling of the battery cell, venting gas, or flames, making it difficult to prevent physical damage to the battery cells.

Therefore, there is a need to develop a structure capable of more reliably separating battery cells to prevent, even if a thermal event occurs in some battery cells inside a battery module, gas or flames from spreading to other battery cells inside the battery module and causing thermal runaway, thereby suppressing and delaying thermal propagation.

### DISCLOSURE

### Technical Problem

The present disclosure is designed to solve the problems of the related art, and therefore the present disclosure is directed to providing a battery module capable of effectively preventing or delaying thermal runaway propagation between battery cells by clearly partitioning and separating the battery cells.

The present disclosure is also to provide a battery pack and vehicle including such a battery module.

However, the technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is configured a battery module including: a plurality of battery cells; a module case configured to store the plurality of battery cells and having a plurality of venting holes formed on one side thereof; and a barrier member provided inside the module case and configured to partition the plurality of battery cells into a plurality of cell groups and to communicate each of the plurality of cell groups with the venting hole corresponding thereto.

The barrier member may be configured by bending a single plate multiple times.

The barrier member may be configured in the form of multiple bends so as to form a plurality of first spaces configured to store the cell groups and second spaces configured to separate the plurality of first spaces from each other.

The first space may be configured to have an opening toward the venting hole.

The second space may be configured to have an opening toward an opposite side of the venting hole.

A plurality of venting holes may be provided, and the second space may be located between adjacent venting holes.

The second space may have a cooling medium provided therein.

The module case may include a partition configured to be insertable into the second space.

The barrier member may be configured to be bent, and may include a horizontal portion configured to extend flat along a stacking direction of the battery cells so that the cell group is seated thereon, and a vertical portion configured to extend flat along a height direction of the battery cells.

The vertical portion may be provided between adjacent cell groups.

The vertical portion may be configured in a double-overlapping structure.

An end of the vertical portion may be configured to be in contact with one side of the module case.

The end of the vertical portion may be configured such that a portion thereof is bent inward.

According to another aspect of the present disclosure, there is provided a battery pack including a battery module according to the present disclosure.

According to another aspect of the present disclosure, there is provided a vehicle including a battery pack according to the present disclosure.

### Advantageous Effects

According to one aspect of the present disclosure, it is possible to effectively prevent or delay, even if a thermal event occurs in some battery cells inside the battery module, gas or flames from spreading to other battery cells inside the battery module and causing thermal runaway by clearly partitioning and separating cell groups inside the battery module using barrier members. Therefore, the safety and reliability of the battery module may be ensured.

In addition, according to another aspect of the present disclosure, since various materials such as air layers, cooling media, and insulating materials may be provided between the cell groups through the barrier member configured in the form of multiple bends, thermal propagation can be more effectively prevented between adjacent battery cells.

In addition, according to another aspect of the present disclosure, since the barrier member is configured in a zigzag shape by multiple bends, multiple cell groups can be partitioned, thereby improving productivity when manufacturing the battery module.

In addition, according to another aspect of the present disclosure, since high-temperature gases or flames generated from the battery cell inside the battery module can be smoothly discharged to the outside of the battery module, it is possible to prevent or delay the propagation of thermal runaway due to an increase in the internal pressure of the battery module.

In addition, according to another aspect of the present disclosure, since the barrier member fixes the cell group, it is possible to prevent the battery cell from being deformed or damaged when thermal runaway occurs inside the battery module or when the battery cell swells. Therefore, the structural stability of the battery module may be secured.

In addition, according to another aspect of the present disclosure, it is possible to prevent or delay events, such as fire or explosion, due to thermal runaway of a battery pack including a plurality of battery modules or a device equipped with them.

In addition, the present disclosure may have various other effects, and these will be described in the respective embodiments, or description of effects that may be easily inferred by those skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is an overall perspective view of a battery module according to an embodiment of the present disclosure.
FIG. 2 is an exploded perspective view of a battery module according to an embodiment of the present disclosure.
FIG. 3 is a cross-sectional view of a battery module according to an embodiment of the present disclosure, which may be a cross-sectional view, for example, taken along line I - I' in FIG. 1.
FIG. 4 is an enlarged view of part A in FIG. 3.
FIG. 5 is a drawing illustrating the structure of a barrier member included in a battery module according to an embodiment of the present disclosure.
FIG. 6 is a cross-sectional view of a battery module according to another embodiment of the present disclosure.
FIG. 7 is a cross-sectional view of a battery module to which a barrier member is applied according to another embodiment of the present disclosure.
FIG. 8 is a cross-sectional view of a battery module to which a barrier member is applied according to another embodiment of the present disclosure.
FIG. 9 is a cross-sectional view of a battery module to which a barrier member is applied according to another embodiment of the present disclosure.
FIG. 10 is a cross-sectional view of a battery module to which a barrier member is applied according to another embodiment of the present disclosure.
FIG. 11 is a cross-sectional view of a battery module according to another embodiment of the present disclosure.
FIG. 12 is a partially exploded cross-sectional view of a battery module according to another embodiment of the present disclosure.
FIG. 13 is a cross-sectional view of a battery module according to another embodiment of the present disclosure.
FIG. 14 is a schematic perspective view of a battery pack including a battery module according to an embodiment of the present disclosure.
FIG. 15 is a schematic perspective view of a vehicle including a battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, and does not represent the entire scope of the disclosure, so it should be understood that other equivalents and modifications could be made thereto without departing from the scope of the disclosure at the time of filing the present disclosure.

In addition, the present disclosure may include various embodiments. Redundant descriptions of substantially the same or similar configurations will be omitted from respective embodiments, and a description will be made based on differences therebetween.

Meanwhile, although terms indicating directions such as up, down, left, right, front, and back are used in this specification, it is obvious to those skilled in the art to which the present disclosure pertains that these terms are only for convenience of explanation with reference to the relevant drawings and may vary depending on the position of the target object or the position of the observer.

For example, in the embodiment of the present disclosure, the X-axis direction shown in the drawing may indicate a left-right direction, i.e., a stacking direction of the battery cells, the Y-axis direction may indicate a front-back direction, i.e., a longitudinal direction of the battery cell, perpendicular to the X-axis direction on the horizontal plane (X-Y plane), and the Z-axis direction may indicate an up-down direction (vertical direction), i.e., a height direction of the battery cell, perpendicular to both the X-axis direction and the Y-axis direction.

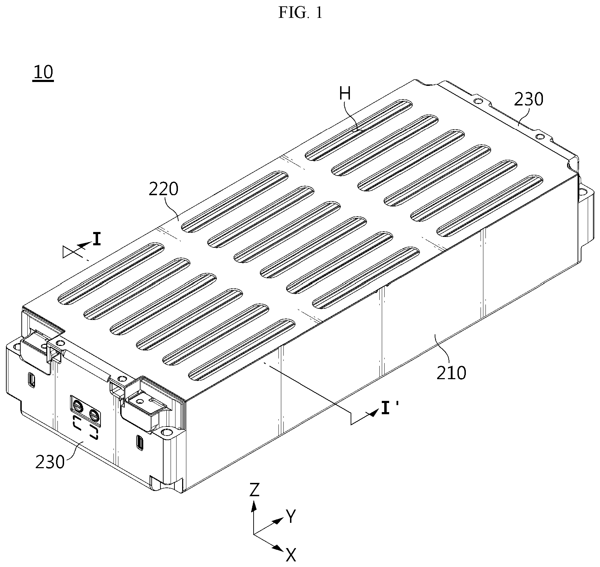

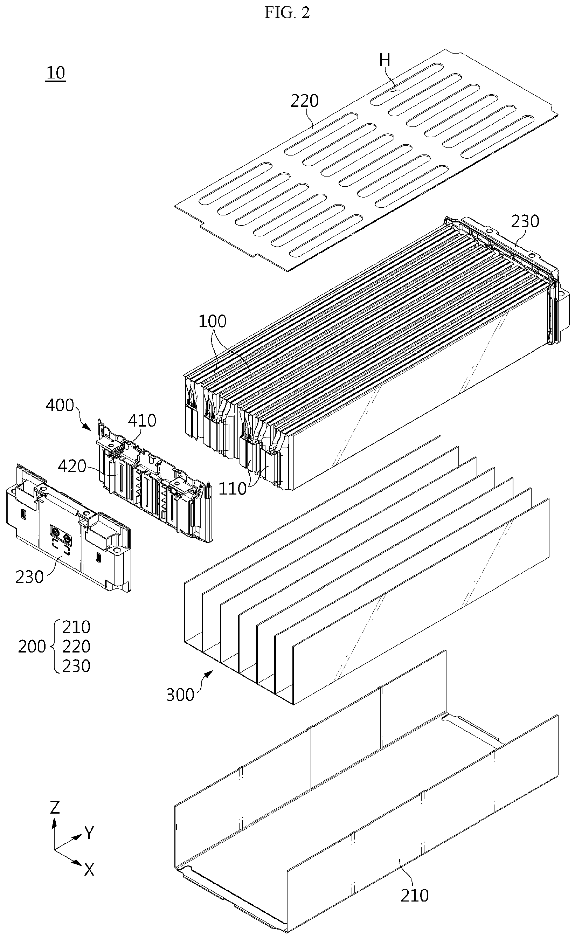

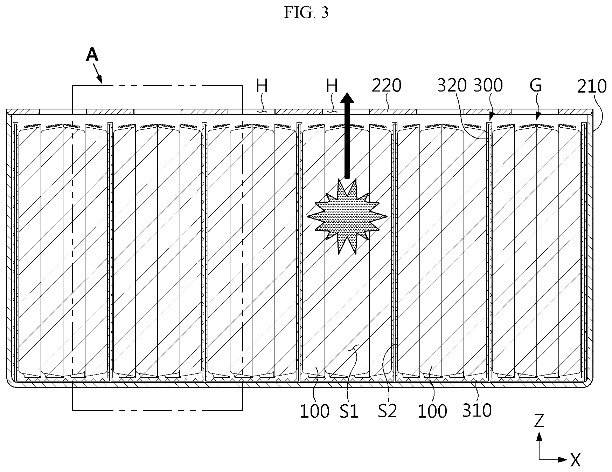

FIG. 1 is an overall perspective view of a battery module according to an embodiment of the present disclosure, and FIG. 2 is an exploded perspective view of a battery module according to an embodiment of the present disclosure. In addition, FIG. 3 is a cross-sectional view of a battery module according to an embodiment of the present disclosure, which may be a cross-sectional view, for example, taken along line I - I' in FIG. 1.

Referring to FIGS. 1 to 3, a battery module 10 according to an embodiment of the present disclosure may include a battery cell 100, a module case 200, and a barrier member 300.

A plurality of battery cells 100 may be provided. The plurality of battery cells 100 may be provided to be stacked in one direction. For example, as shown in FIG. 2, the plurality of battery cells 100 may be stacked along the left-right direction (X-axis direction).

The battery cell 100 may be a pouch-type secondary battery. The battery cell 100 may include an electrode assembly and a cell case that stores the electrode assembly. The cell case may have a receiving portion configured to store the electrode assembly, and a sealing portion formed by heat-fusing the edges of the receiving portion. The sealing portion may be provided on three of the four edges of the battery cell 100.

In addition, each of the plurality of battery cells 100 may have an electrode lead 110. The electrode lead 110 may be connected to the electrode assembly, and may extend to the outside of the cell case, functioning as an electrode terminal.

A pair of electrode leads 110 may be provided, and the pair of electrode leads 110 may extend outward from both ends of the battery cell 100, i.e., in the longitudinal direction (±Y-axis directions). In this case, the pair of electrode leads 110 may be a positive electrode lead and a negative electrode lead. The battery cell 100 may be configured such that two electrode leads 110 are located only at one end in the Y-axis direction, for example, at the end in the +Y-axis direction, as necessary.

The battery cell 100 may be provided to stand with the edge, which does not include the sealing portion, facing downward. As illustrated in FIG. 2, the plurality of battery cells 100 may be disposed side by side in the left-right direction (X-axis direction) while standing in the vertical direction (Z-axis direction). In this case, each battery cell 100 may have the sealing portions facing the front-back direction (Y-axis direction) and the upward direction (+Z-axis direction), and the receiving portion facing the left-right direction (X-axis direction).

In the case where the battery cell 100 is disposed as described above, it is easy to control the venting direction to one side, and edge cooling may be performed through the surface that does not include the sealing portion, thereby securing cooling performance.

The present disclosure is not limited to a specific type or shape of the battery cell 100, and various battery cells 100 known at the time of filing the present disclosure may be applied. In the present embodiment, although a pouch-type secondary battery with high energy density and easy stacking will be described as shown in the drawing, it is obvious that a cylindrical or prismatic secondary battery may also be applied to the battery cell 100.

In addition, the battery cell 100 of the present disclosure may indicate one battery or a group of batteries.

Meanwhile, referring to FIG. 2, the battery module 10 of the present disclosure may further include a bus-bar frame assembly 400. The bus-bar frame assembly 400 may be provided inside the module case 200 and configured to cover at least one side of the plurality of battery cells 100. In the present embodiment, as shown in FIG. 2, the bus-bar frame assembly 400 may be coupled to the front and rear sides of the plurality of battery cells 100.

The bus-bar frame assembly 400 may include a bus-bar frame 410 and a plurality of bus-bars 420. The bus-bar frame 410 may be disposed to be coupled substantially to the front and rear sides of the plurality of battery cells 100. The bus-bar frame 410 may have slits through which the electrode leads 110 of the battery cells 100 extend outward in the +Y-axis or -Y-axis direction. In addition, the bus-bar frame 410 may be formed of a material having electrical insulation, such as a plastic material, and configured such that the bus-bar 420 may be attached to the outer surface.

The plurality of bus-bars 420, as a means for connecting the battery cells 100 in series and/or in parallel, may be formed of a metal material, such as copper, aluminum, nickel, etc., and may be configured in the shape of bars. The electrode leads 110 of the battery cells 100 may pass through the slits of the bus-bar frame 410 and extend outside the bus-bar frame 410, and the extending portions may be attached to the surface of the bus-bar 420 by welding or the like.

The module case 200 may be configured to store a plurality of battery cells 100. Specifically, an inner space may be formed in the module case 200, and a plurality of battery cells 100 may be stored in the inner space.

A venting hole H may be formed in the module case 200. A plurality of venting holes H may be provided at regular intervals in the horizontal direction (X-axis and Y-axis directions). The venting hole H may be configured to discharge venting gas generated from the battery cell 100 to the outside of the module case 200.

For example, as illustrated in FIG. 1, the venting hole H may be formed on the upper side of the module case 200. Accordingly, upward-directional venting of the battery module 10 may be possible through the venting hole H.

The barrier member 300 may be provided inside the module case 200. The barrier members 300 may be configured to group the plurality of battery cells 100. The barrier members 300 may be configured to partition the plurality of battery cells 100 into a plurality of cell groups G. For example, as shown in FIG. 3, the barrier member 300 may be configured to group the battery cells 100 into sets of four. That is, one cell group G may include four battery cells 100.

The barrier member 300 may be formed of a material having excellent heat resistance and/or fire resistance. For example, the barrier member 300 may be formed of a mica material. Therefore, it may be configured to maintain a sealing structure without deformation even at high temperature and high pressure.

In addition, the barrier member 300 may be made of a compressible material. For example, the barrier member 300 may have any one of silicone, aerogel, polyurethane, or the like. Accordingly, the barrier member 300 may be configured to be in close contact with the adjacent battery cell 100.

In addition, the barrier member 300 may have a material having electrical insulating properties. Accordingly, electrical insulation may be secured between the battery cells 100.

Meanwhile, the venting hole H may be provided for each cell group G. In addition, the plurality of venting holes H may be separated or partitioned by the barrier members 300. The barrier members 300 may be configured such that each of the plurality of cell groups G communicates with a venting hole H corresponding thereto.

More specifically, the barrier member 300 may be configured to cover some of the six sides of the cell group G. For example, the barrier member 300 may be configured to cover the left side, the right side, and the lower side of the cell group G. In this case, the side of the cell group G not covered by the barrier member 300, such as the upper side of the cell group G, may be located to the side toward the venting hole H.

Accordingly, each cell group G may communicate with the venting hole H, so that, as indicated by the bold arrow in FIG. 3, venting gas or flame generated by a thermal event occurring in a cell group G may be discharged to the outside of the module case 200 through the venting hole H corresponding thereto.

According to the above-implemented configuration of the present disclosure, the plurality of cell groups G may be partitioned or separated to prevent the gas or flame generated in any cell group G from spreading to another neighboring cell group G, thereby preventing thermal propagation. As a result, thermal runaway propagation between the battery cells 100 may be prevented or delayed. Therefore, the safety and reliability of the battery module 10 may be ensured.

In addition, according to the above-implemented configuration of the present disclosure, high-temperature gas or flame generated from the battery cell 100 inside the battery module 10 may be smoothly discharged to the outside of the battery module 10 through the venting hole H. Therefore, it is possible to prevent or delay thermal runaway propagation from occurring due to an increase in the internal pressure of the battery module 10.

Furthermore, according to the above-implemented configuration of the present disclosure, since each cell group G communicate only with the venting hole H corresponding thereto, gas or flame generated in a certain cell group G may be discharged to the outside of the module case 200 only through the venting hole H. Therefore, thermal runaway propagation between the battery cells 100 may be prevented more effectively.

Meanwhile, referring to FIG. 2, the module case 200 may include a case body 210 and a top plate 220. The case body 210 may be configured to have at least an upper opening. For example, the case body 210 may have an upper opening, and front and rear openings. That is, the case body 210 may be configured as a U-frame.

The case body 210 may be configured as a metal material having rigidity and heat resistance in order to physically or chemically protect the stored battery cells 100.

The top plate 220 may be provided to form the upper side of the module case 200. The top plate 220 may be welded to the case body 210. In this case, the top plate 220 and the case body 210 may be welded to each other. In this case, the top plate 220 and the case body 210 may be coupled into a square tube with front and rear openings.

Meanwhile, the module case 200 may include end plates 230 provided on the front and rear openings of the case body 210. The end plate 230 may be welded to the case body 210. Although not shown in the drawings for convenience, the end plate 230 may be configured such that, for example, an inner surface is made of an insulating material and an outer surface is made of a metal material. In addition, the end plate 230 may be partially provided with holes or slits for exposing components that are required to be exposed to the outside, such as a positive electrode terminal and negative electrode terminal or a connector of the battery module 10.

In addition, the module case 200 may be formed in various other shapes. For example, the module case 200 may include a box-shaped lower case having an upper opening and an upper cover configured to cover the upper opening of the lower case. Alternatively, the module case 200 may be configured as a mono-frame.

In this case, as disclosed in the embodiments shown in FIGS. 1 to 3, the venting hole H may be formed in the top plate 220. That is, the venting hole H may be provided above the cell group G. In this case, the barrier member 300 may be configured not to cover the upper side of the cell group G. That is, the barrier member 300 may be configured so that the upper side of the cell group G is exposed. Accordingly, the venting gas or flame generated in the cell group G may be discharged upward through the venting hole H provided above the cell group G.

High-temperature gases such as the venting gas or flame generated from the battery cell 100 have a strong tendency to rise, and may head toward the empty space provided above the battery cells 100. In this case, according to the above-implemented configuration of the present disclosure, since the venting hole H is provided above the battery cell 100, the heat such as the venting gas or flame may be minimized from heading to other battery cells 100.

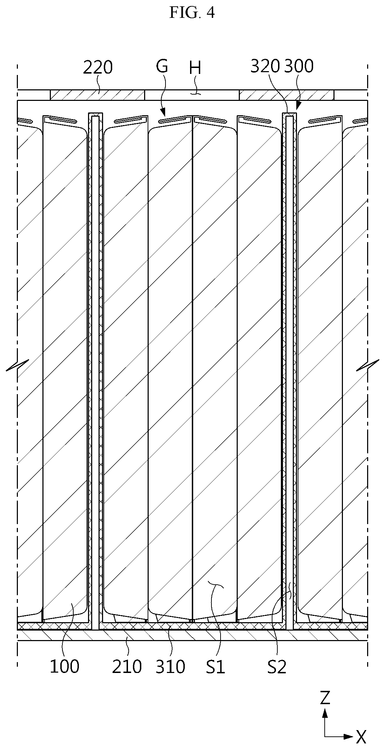

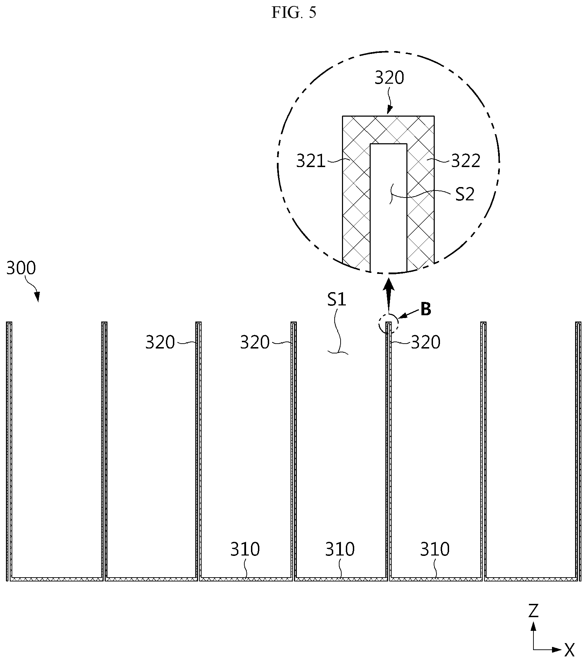

FIG. 4 is an enlarged view of part A in FIG. 3, and FIG. 5 is a drawing illustrating the structure of a barrier member included in a battery module according to an embodiment of the present disclosure. The structure of the barrier member 300 will be described in more detail with reference to FIGS. 4 and 5 in addition to FIGS. 1 to 3.

Referring to FIGS. 4 and 5, the barrier member 300 may be configured by bending a single plate multiple times. The barrier member 300 may be configured by bending a single plate in opposite directions multiple times. The barrier member 300 may be configured by bending a single plate at 180 degrees. Accordingly, the barrier member 300 may be configured in a zigzag shape. In addition, the barrier member 300 may be configured in a Z shape.

A plurality of barrier members 300 having the above configuration may be provided inside the module case 200. Alternatively, as disclosed in the embodiment illustrated in FIG. 3, a single barrier member 300 may be provided inside the module case 200 so as to cover all battery cells 100.

According to the above-implemented configuration of the present disclosure, since the barrier member 300 is configured in a zigzag shape through multiple bends, the plurality of cell groups G may be simply partitioned. Accordingly, productivity may be improved when manufacturing the battery module 10.

Furthermore, the multiple bends of the barrier member 300 may produce a plurality of spaces. More specifically, the barrier member 300 may be configured in the form of multiple bends, thereby forming a first space S1 and a second space S2. That is, the first space S1 and the second space S2 may be formed by the barrier member 300 being bent multiple times.

The first space S1 may be configured to store the cell group G. The first space S1 may be configured to allow the cell group G to be seated therein. A plurality of first spaces S1 may be formed. Accordingly, each cell group G may be provided in each first space S1.

The second space S2 may be configured to separate the plurality of first spaces S1 from each other. The second space S2 may be provided between adjacent first spaces S1. A plurality of second spaces S2 may be formed. The first spaces S1 and the second spaces S2 may be arranged alternately along the stacking direction of the battery cell 100. An air layer may be formed in the second space S2. In the above-implemented configuration of the present disclosure, since the second space S2 is provided, thermal propagation between adjacent cell groups G may be suppressed or delayed.

Meanwhile, each of the plurality of venting holes H may be provided in the first space S1. In this case, the first space S1 may have an opening toward the venting hole H. For example, as disclosed in the embodiment illustrated in FIG. 4, the venting hole H may be positioned above the cell group G, and the first space S1 may have an opening toward the upper side of the cell group G. Accordingly, venting gas or flames generated from the cell group G inside the first space S1 may be discharged upward through the venting hole H.

According to the above-implemented configuration of the present disclosure, the first space S1 may be configured to communicate with the venting hole H such that the venting gas or the like generated from the cell group G inside the first space S1 may be guided and discharged only toward the venting hole H, instead of moving toward other cell groups G.

The second space S2 may be configured to have an opening toward the opposite side of the venting hole H. For example, as disclosed in the embodiment illustrated in FIG. 4, the second space S2 may have an opening toward the lower side of the cell group G.

According to the above-implemented configuration of the present disclosure, the first spaces S1 to store the battery cells 100 may be reliably partitioned or separated by the second space S2. As a result, even if a thermal event occurs in some battery cells 100 inside the battery module 10, it is possible to effectively prevent or delay gas or flame from spreading to other battery cells 100 inside the battery module 10 and causing thermal runaway.

As described above, a plurality of venting holes H may be provided. In this case, the second space S2 may be located between adjacent venting holes H. According to the above-implemented configuration of the present disclosure, the first space S1 and the venting hole H corresponding thereto may be more reliably partitioned and separated by the second space S2.

More specifically, referring to FIGS. 3 to 5, the barrier member 300 may be configured to be bent, and may include a horizontal portion 310 and a vertical portion 320. That is, the horizontal portion 310 and the vertical portion 320 may be defined by the barrier member 300 being bent multiple times.

The horizontal portion 310 may be configured such that the cell group G is seated thereon. The horizontal portion 310 may be configured to extend flat along the stacking direction of the battery cell 100. The horizontal portion 310 may be configured in the form of a flat plate.

The vertical portion 320 may be configured to extend flat along the height direction of the battery cell 100. The vertical portion 320 may extend upward from the horizontal portion 310. The angle between the vertical portion 320 and the horizontal portion 310 may be approximately 90 degrees.

The first space S1 may be formed by one horizontal portion 310 and two vertical portions 320. The vertical portion 320 may be provided between adjacent cell groups G. The vertical portion 320 may be provided on both left and right sides of the cell group G. That is, the vertical portions 320 may be configured to partition the plurality of cell groups G.

According to the above-implemented configuration of the present disclosure, since the cell group G is configured to be at least partially surrounded by the vertical portions 320 and the horizontal portion 310, thermal propagation between the battery cells 100 may be suppressed.

Furthermore, the vertical portions 320 may be configured to fix the cell group G from both sides. According to the above-implemented configuration of the present disclosure, the barrier member 300 may pressurize the cell group G on both sides when the battery cells 100 swell, thereby suppressing the swelling of the battery cells 100. Accordingly, the barrier member 300 may contribute to the structural rigidity of the battery cells 100.

In addition, referring to part B in FIG. 5, the vertical portion 320 may be configured in a double-overlapping structure. The vertical portion 320 may include a first vertical portion 321 and a second vertical portion 322. The first vertical portion 321 and the second vertical portion 322 may be formed by bending a single plate at approximately 180 degrees. According to the embodiment illustrated in FIG. 5, the end of the vertical portion 320 may be bent twice at approximately 90 degrees to form the first vertical portion 321 and the second vertical portion 322. One end of the vertical portion 320 may be configured to be closed.

In this case, the first vertical portion 321 and the second vertical portion 322 may be configured to be spaced apart from each other. The space formed between the first vertical portion 321 and the second vertical portion 322 may be defined as the second space S2.

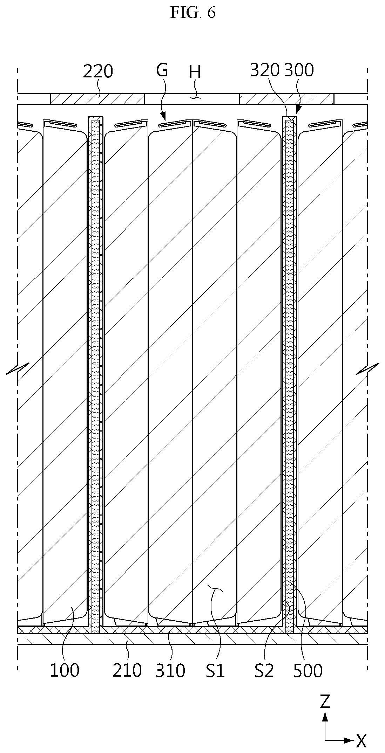

FIG. 6 is a cross-sectional view of a battery module according to another embodiment of the present disclosure.

Meanwhile, various materials may fill the second space S2 formed by the vertical portion 320 configured such that one end is closed. For example, as disclosed in the embodiment illustrated in FIG. 6, a cooling medium 500 may be provided inside the second space S2. That is, a cooling path may be formed in the second space S2.

In this case, although not illustrated in the drawing, a cooling medium 500 may also be provided between the bottom surface of the module case 200 and the horizontal portion 310 of the barrier member 300. That is, a cooling path may be formed at the bottom of the battery cells 100, and this cooling path may communicate with the second space S2, thereby cooling not only the lower side of the cell group G but also the left and right sides thereof.

According to the above-implemented configuration of the present disclosure, the cooling medium 500 may be provided between the cell groups G to cool both sides of the cell group G when a thermal event occurs in the battery cell 100. Accordingly, thermal propagation between the battery cells 100 inside the battery module 10 may be delayed more efficiently.

Furthermore, according to the above-implemented configuration of the present disclosure, the first space S1 in which the battery cells 100 are provided as described above has an opening toward the venting hole H, and the second space S2 in which the cooling medium 500 is provided has an opening toward the opposite side of the venting hole H, so that the cooling path and the venting path may be reliably separated.

Alternatively, unlike the above embodiment, an insulating material may be provided in the second space S2. Alternatively, a fire-resistant pad may be provided in the second space S2. Alternatively, a thermal resin may be provided in the second space S2. In addition, various materials may be provided in the second space S2.

According to the above-implemented configuration of the present disclosure, various materials such as a cooling medium or an insulating material may be interposed between adjacent cell groups G by the barrier member 300 configured in the form of multiple bends. Accordingly, thermal propagation between adjacent battery cells 100 may be prevented more effectively.

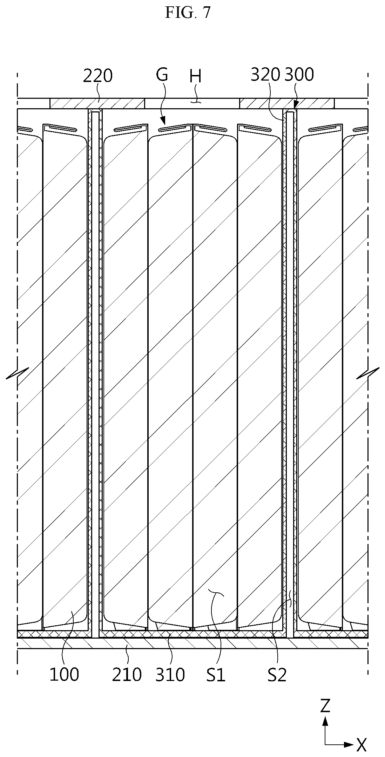

FIG. 7 is a cross-sectional view of a battery module to which a barrier member is applied according to another embodiment of the present disclosure.

The barrier member 300 may be configured to extend further outward, for example, upward, than the battery cell 100. Specifically, the vertical portion 320 of the barrier member 300 may be configured to extend further upward than the battery cell 100. The barrier member 300 may be configured to extend further upward than the receiving portion of the battery cell 100. That is, the vertical height of the barrier member 300 may be configured to be greater than the vertical height of the battery cell 100.

Considering the convenience of assembly or assembly tolerance, one side of the module case 200 and the battery cells 100 may be provided to be spaced a predetermined distance apart from each other. In such a case, if a thermal event occurs in one battery cell 100, venting gas or flame is likely to spread to another adjacent battery cell 100 through a predetermined space formed between the battery cells 100 and the module case 200. However, according to the above-implemented configuration of the present disclosure, the barrier member 300 may more reliably partition and separate the battery cells 100, thereby preventing venting gas or flame from moving beyond the barrier member 300.

Furthermore, as disclosed in the embodiment illustrated in FIG. 7, the barrier member 300 may be configured to at least partially come into contact with one side of the module case 200. In particular, the end of the vertical portion 320 may be configured to be in contact with one side of the module case 200. For example, the end of the vertical portion 320 may be configured to be in contact with the top plate 220. The end of the vertical portion 320 may indicate a portion of the barrier member 300, which is bent at 180 degrees.

The barrier member 300 may be in surface contact with one side of the module case 200. The barrier member 300 and one side of the module case 200 may be configured to be in surface contact along the longitudinal direction of the battery cell 100.

According to the above-implemented configuration of the present disclosure, since the gap between the barrier member 300 and the module case 200 is minimized, the space through which the venting gas may flow is reduced, so that thermal runaway propagation to adjacent battery cells 100 may be more reliably prevented.

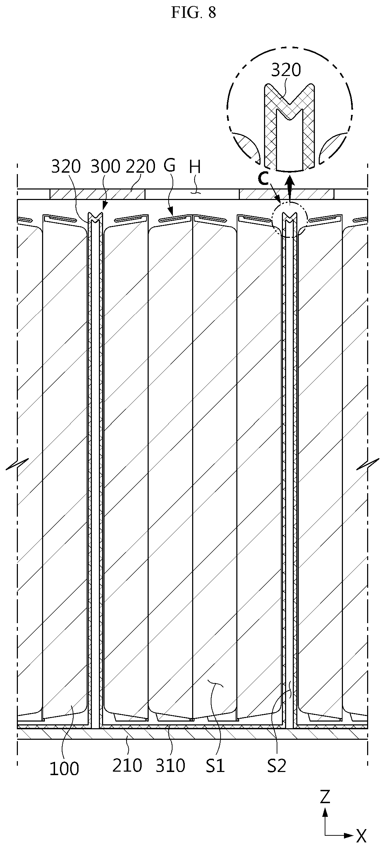

FIG. 8 is a cross-sectional view of a battery module to which a barrier member is applied according to another embodiment of the present disclosure.

According to an embodiment of the present disclosure, the end of the vertical portion 320 may be configured to be partially bent. For example, as shown in part C in FIG. 8, the end of the vertical portion 320 may be configured such that a portion thereof is bent inward. The end of the vertical portion 320 may be configured such that the width is reduced when the battery cell 100 swells. That is, as the battery cell 100 swells, the vertical portion 320 may be compressed from both sides, so that the bent portion of the vertical portion 320 may be folded. The vertical portion 320 may be configured such that the width of the vertical portion 320 is restored to its original state when the battery cell 100 switches to the normal state.

According to the above-implemented configuration of the present disclosure, when swelling of the battery cell 100 occurs, swelling pressure may be absorbed by the barrier member 300 configured such that the end of the vertical portion 320 is bent inward. Accordingly, deformation or damage of the battery cell 100 may be prevented when swelling of the battery cell 100 occurs. Therefore, structural stability of the battery module may be secured.

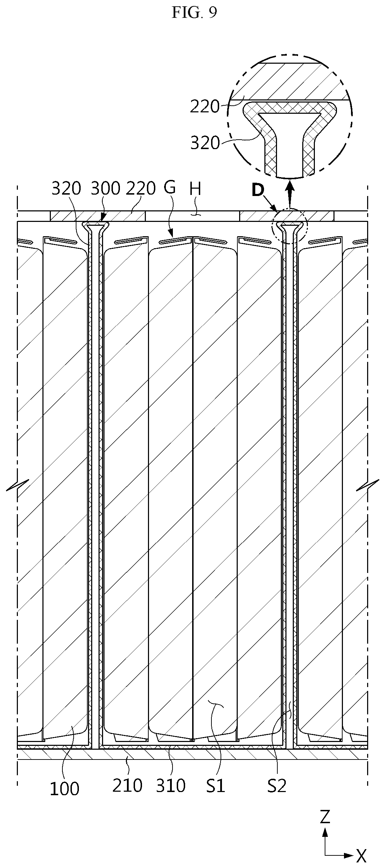

FIG. 9 is a cross-sectional view of a battery module to which a barrier member is applied according to another embodiment of the present disclosure.

According to an embodiment of the present disclosure, the end of the vertical portion 320 may be configured to at least partially protrude toward the venting hole H. For example, as shown in part D in FIG. 9, the end of the vertical portion 320 may be configured such that a portion thereof is bent outward. The end of the vertical portion 320 may be configured to be inclined toward the venting hole H. Accordingly, the end of the vertical portion 320 may be configured to guide venting gas or flame toward the venting hole H.

According to the above-implemented configuration of the present disclosure, the venting gas or flame may be discharged to the outside of the battery module 10 through the venting hole H without moving to another cell group G by the outward-bent portion of the end of the vertical portion 320.

Furthermore, the end of the vertical portion 320 may be configured to be in contact with the inner surface of the module case 200. In this case, a hermetic space may be formed by the vertical portions 320 that are adjacent to each other, among the plurality of vertical portions 320. Here, the hermetic space indicates the space capable of restricting venting gas or the like from moving between the cell groups G that are adjacent to each other in the left-right direction (X-axis direction) based on one vertical portion 320 provided therebetween.

According to the above-implemented configuration of the present disclosure, upward-directional venting may be more effectively induced. If gas generated inside the battery module 10 is discharged in various directions, the time for discharging the venting gas may become longer, which may significantly reduce the safety of the battery module 10. However, according to the present embodiment, the venting gas or the like may be quickly guided to the venting hole H and may be minimized from spreading in all directions inside the module case 100.

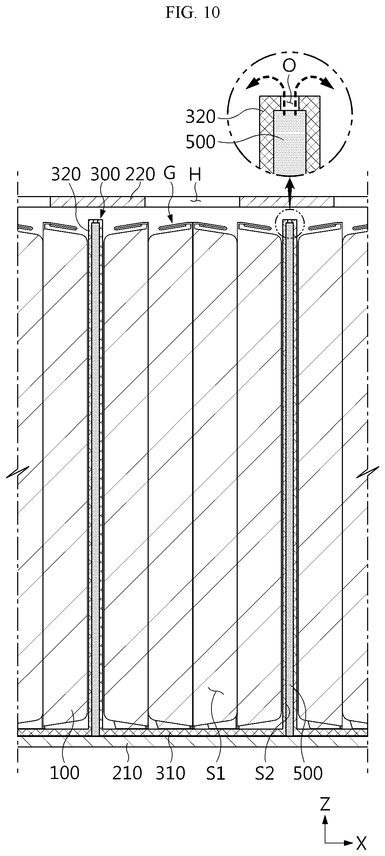

FIG. 10 is a cross-sectional view of a battery module to which a barrier member is applied according to another embodiment of the present disclosure.

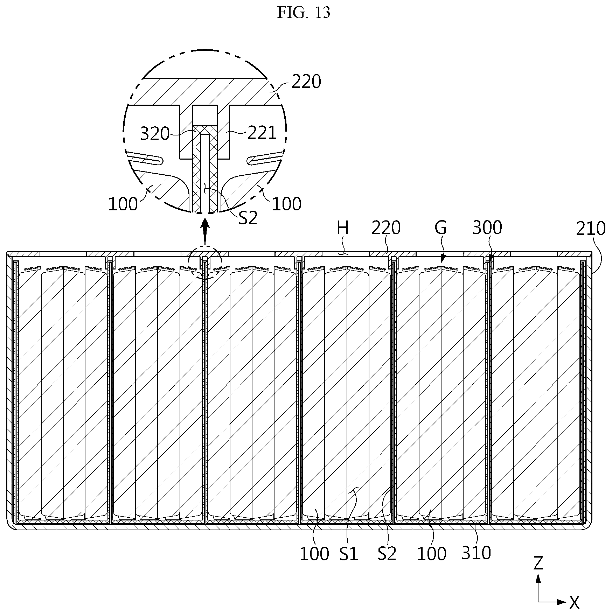

According to an embodiment of the present disclosure, the vertical portion 320 may be configured to be at least partially openable by venting gas or flame. For example, as disclosed in the embodiment illustrated in FIG. 13, at least a portion of the vertical portion 320 may be configured to be melted by the heat of the venting gas. More specifically, a portion of the vertical portion 320 may be opened to form an opening O. The opening O formed by melting due to heat may be configured to discharge the cooling medium 500 provided inside the second space S2 to the outside of the vertical portion 320. In particular, the opening O may be provided at the end of the vertical portion 320.

According to the above-implemented configuration of the present disclosure, when a thermal event occurs in a specific battery cell 100, the opening O provided on one side of the vertical portion 320 may be opened so that the cooling medium 500 may be discharged to the outside of the vertical portion 320 through the opening O (see the dotted arrows in FIG. 10). Furthermore, when a thermal event of the battery cell 100 occurs in the first space S1, the discharged cooling medium 500 may move to the first space S1 where the battery cell 100 is located, thereby controlling the thermal event of the battery cell 100. Accordingly, the battery cell 100 may be quickly cooled, thereby suppressing thermal runaway of the battery module 10.

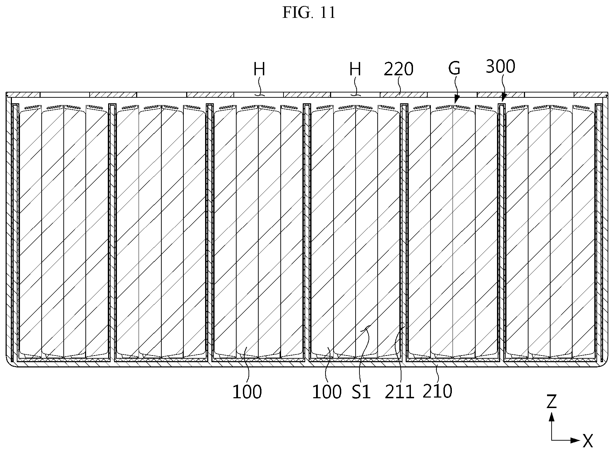

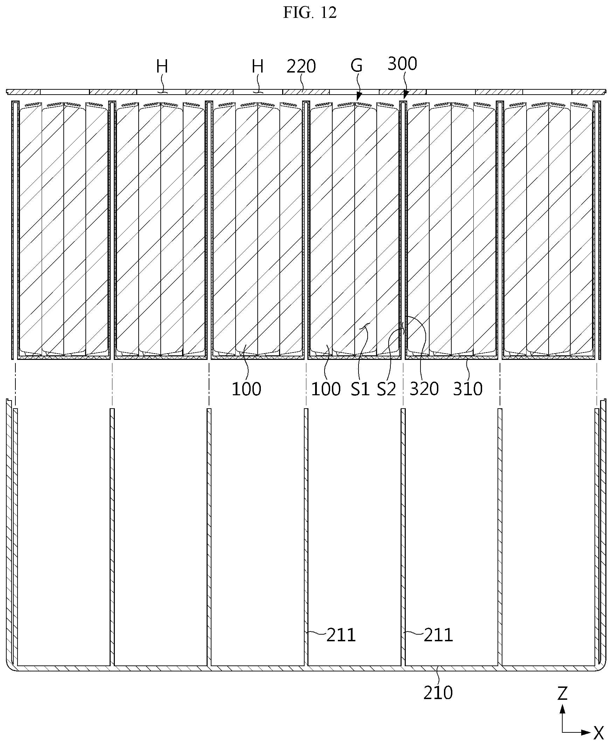

FIG. 11 is a cross-sectional view of a battery module according to another embodiment of the present disclosure, and FIG. 12 is a partially exploded cross-sectional view of a battery module according to another embodiment of the present disclosure.

According to an embodiment of the present disclosure, the module case 200 and the barrier member 300 may be configured to be coupled to each other. For example, as disclosed in the embodiments illustrated in FIGS. 11 and 12, the case body 210 may be configured to be at least partially inserted into the second space S2. The case body 210 may have a partition 211 configured to be insertable into the second space S2. The partition 211 may be fitted into the second space S2 formed in the vertical portion 320.

According to the above-implemented configuration of the present disclosure, the assembly position of the barrier member 300 may be guided during the process of coupling the barrier member 300 to the case body 210, so that the assemblability may be improved.

In addition, according to the above-implemented configuration of the present disclosure, since the partition 211 is inserted into the second space S2 formed by the barrier member 300, the fixing force between the module case 200 and the barrier member 300 may be improved. Accordingly, even when thermal runaway occurs inside the battery module 10, the barrier member 300 may be prevented from being deformed or damaged, thereby securing the structural stability of the battery module 10.

Furthermore, according to the above-implemented configuration of the present disclosure, it is possible to reduce the possibility that the high-temperature and high-pressure venting gas or flame pushes out the vertical portion 320 of the barrier member 300 or that the vertical portion 320 is deformed to be bent by the internal pressure of the venting gas, causing heat to be transferred to other cell groups G.

FIG. 13 is a cross-sectional view of a battery module according to another embodiment of the present disclosure.

According to an embodiment of the present disclosure, the top plate 220 and the barrier member 300 may be configured to be coupled to each other. For example, as disclosed in the embodiment illustrated in FIG. 13, the top plate 220 may have a protrusion 221. The protrusion 221 may be configured such that at least a portion protrudes inward from the inner surface of the top plate 220.

A plurality of protrusions 221 may be provided along one direction. The one direction may be defined as the direction in which the battery cells 100 are arranged, that is, the left-right direction (parallel to the X-axis). In addition, the protrusion 221 may be configured to extend along the longitudinal direction (front-back direction) of the battery cell 100.

Furthermore, the end of the vertical portion 320 of the barrier member 300 may be configured to be inserted into the space between adjacent protrusions 221. That is, the protrusion 221 may be configured to fix the end of the vertical portion 320 from both sides in the left-right direction. In this case, the protrusion 221 may be configured to correspond to the length of the vertical portion 320.

According to the above-implemented configuration of the present disclosure, since the barrier member 300 may be supported on both sides by the protrusion 221, the fixing force between the barrier member 300 and the top plate 220 may be further improved. Accordingly, the arrangement state of the battery cell 100 and the barrier member 300 may be stably maintained.

In addition, according to the above-implemented configuration of the present disclosure, the assembly position of the top plate 220 may be guided during the process of coupling the top plate 220 to the case body 210, so that the assemblability may be improved.

Furthermore, according to the above-implemented configuration of the present disclosure, it is possible to reduce the possibility that the high-temperature and high-pressure venting gas or flame pushes out the vertical portion 320 of the barrier member 300 or that the barrier member 300 is deformed to be bent by the internal pressure of the venting gas, causing heat to be transferred to other battery cells 100. Therefore, when the thermal runaway propagation of the battery module 10 occurs, the thermal runaway propagation between the battery cells 100 may be effectively prevented or delayed.

In addition, according to the above-implemented configuration of the present disclosure, the sealing force between the end of the barrier member 300 and the top plate 220 may be stably secured. Therefore, according to the above-implemented configuration, the plurality of battery cells 100 may be more reliably partitioned and separated, so that the thermal propagation prevention performance between the battery cells 100 may be further improved.

Meanwhile, the protrusion 221 may be formed integrally with the top plate 220. That is, the protrusion 221 may be configured integrally with the bottom surface of the top plate 220. Specifically, the top plate 220 may be extruded so that the protrusion 221 is formed integrally with the top plate 220. As the top plate 220 is extruded, the protrusion 221 may be formed to extend in a straight line along the extrusion direction.

According to the above-implemented configuration of the present disclosure, since the protrusion 221 is provided integrally with the top plate 220, the process of combining the protrusion 221 with the top plate 220 may be omitted, and defects at the coupling portion of the protrusion 221 and the top plate 220 may be minimized.

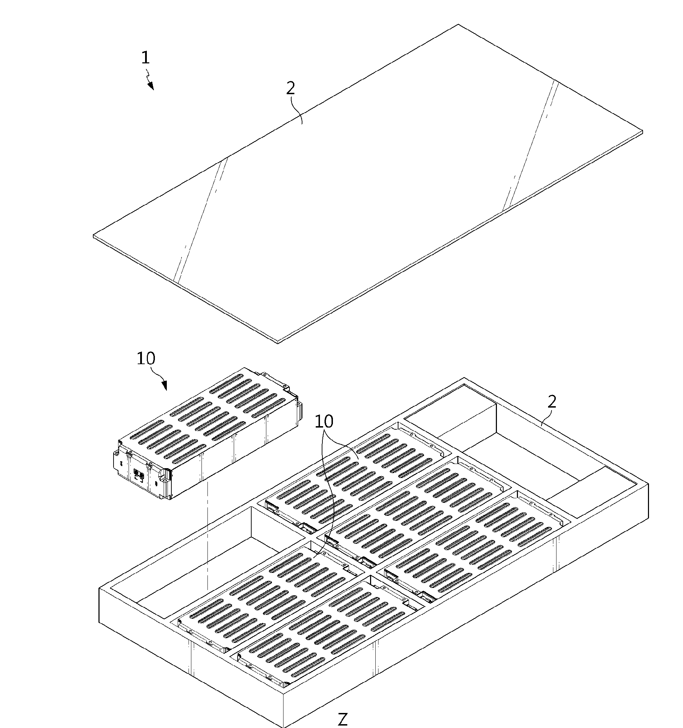

FIG. 14 is a schematic perspective view of a battery pack including a battery module according to an embodiment of the present disclosure.

Referring to FIG. 14, the battery pack 1 according to an embodiment of the present disclosure may include one or more battery modules 10 according to an embodiment of the present disclosure as described above. The battery pack 1 according to the present disclosure may further include a pack case 2 for storing a BMS (Battery Management System), a current sensor, a fuse, and the like for integrated control of charging and discharging of one or more battery modules, and the components described above.

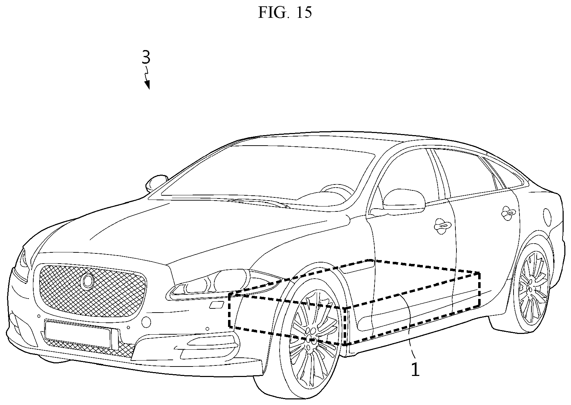

FIG. 15 is a schematic perspective view of a vehicle including a battery pack according to an embodiment of the present disclosure.

Referring to FIG. 15, a vehicle 3 according to an embodiment of the present disclosure may include one or more battery packs 1 according to an embodiment of the present disclosure or battery modules 10 according to an embodiment of the present disclosure. The vehicle 3 according to the present disclosure may be, for example, an electric vehicle, a hybrid vehicle, or a plug-in hybrid vehicle. The vehicle 3 includes a four-wheel vehicle and a two-wheel vehicle. The vehicle 3 may be operated by power supplied from a battery pack 1 or a battery module 10 according to an embodiment of the present disclosure.

As described above, although the present disclosure has been described with reference to limited embodiments and drawings, the present disclosure is not limited thereto, and various modifications and variations are possible without departing from the technical idea of the present disclosure and the scope of equivalence of the claims to be described below by those skilled in the art to which the present disclosure pertains.

## Claims

1. A battery module comprising:
a plurality of battery cells;
a module case configured to store the plurality of battery cells and having a plurality of venting holes formed on one side thereof; and
a barrier member provided inside the module case and configured to partition the plurality of battery cells into a plurality of cell groups and to communicate each of the plurality of cell groups with the venting hole corresponding thereto.

2. The battery module according to claim 1,
wherein the barrier member is configured by bending a single plate multiple times.

3. The battery module according to claim 1,
wherein the barrier member is configured in a form of multiple bends so as to form a plurality of first spaces configured to store the cell groups and second spaces configured to separate the plurality of first spaces from each other.

4. The battery module according to claim 3,
wherein the first space is configured to have an opening toward the venting hole.

5. The battery module according to claim 3,
wherein the second space is configured to have an opening toward an opposite side of the venting hole.

6. The battery module according to claim 3,
wherein the plurality of venting holes are arranged along a stacking direction of the battery cells, and
wherein the second space is located between adjacent venting holes.

7. The battery module according to claim 3,
wherein the second space has a cooling medium provided therein.

8. The battery module according to claim 3,
wherein the module case comprises a partition configured to be insertable into the second space.

9. The battery module according to claim 1,
wherein the barrier member is configured to be bent and comprises
a horizontal portion configured to extend flat along a stacking direction of the battery cells so that the cell group is seated thereon, and
a vertical portion configured to extend flat along a height direction of the battery cells.

10. The battery module according to claim 9,
wherein the vertical portion is provided between adjacent cell groups.

11. The battery module according to claim 9,
wherein the vertical portion is configured in a double-overlapping structure.

12. The battery module according to claim 9,
wherein an end of the vertical portion is configured to be in contact with one side of the module case.

13. The battery module according to claim 9,
wherein an end of the vertical portion is configured such that a portion thereof is bent inward.

14. A battery pack comprising a battery module according to any one of claims 1 to 13.

15. A vehicle comprising a battery module according to any one of claims 1 to 13.
